# EUROPEAN PATENT SPECIFICATION

(11) **EP 1 393 616 B1**
(45) Date of publication and mention of the grant of the patent: **27.02.2008**
(21) Application number: 03255434.7
(22) Date of filing: 29.08.2003
(51) Int. Cl.: A01G 3/00, B02C 18/22

(54) **Improvements in or relating to shredders**
Apparat zum Zerhacken
Appareil à déchiqueter

(30) Priority: 30.08.2002 GB 0220647; 02.05.2003 GB 0310196
(43) Date of publication of application: 03.03.2004
(73) Proprietor: ROBERT BOSCH GMBH, 70469 Stuttgart (DE)
(72) Inventor: Quigley, Andrew, Derbyshire, DE4 4NF (GB)
(74) Representative: Bailey, David Martin

(56) References cited:
- US-A- 4 778 117
- US-A- 5 323 927

## Description

The present invention relates to improvements in or relating to shredders. In particular, it relates to an inlet for a shredding or chopping machine of the type used for shredding plant material such as garden waste.

In such shredding or chopping machines, plant material such as twigs, branches and so on is typically chopped or shredded into smaller pieces suitable for composting or mulching by means of rapidly rotating shredding blades or contra-rotating shredding elements or cogs. Obviously, it is necessary to ensure that the user of such machines cannot contact the rotating elements when in use. Accordingly, the cutting elements are conventionally mounted at a lower end of an elongate housing having an inlet having a feed opening for receipt of the material to be shredded and an outlet downstream of the cutting elements through which shredded material is ejected.

Although the elongate nature of the housing is advantageous from a safety viewpoint, it can allow material entering the housing through the inlet becoming entangled or poorly aligned with respect to the cutters such that the apparatus can be clogged with plant material and cease to work.

Furthermore, the safety standards with which the inlets of such shredders must comply specify maximum separations between walls of the feed opening and maximum diameters for any circular feed openings. This places a considerable restriction on the size of material which can be inserted into the apparatus.

US 5,323,927, which is considered to represent the closest prior art, shows a vegetation shredder having a cloverleaf design inlet in which inverted conical walls incline towards a central aperture to guide vegetation towards the aperture and into the shredding chamber.

The present invention seeks to address these problems in the prior art.

In its broadest sense, the present invention provides a feed inlet for a shredder apparatus, the feed inlet having an opening between opposed first and second walls, wherein at least one of the first and second walls includes at least one finger projecting into the opening.

Typically, each finger includes an inclined upper surface.

Preferably, each of the first and second walls is inclined. More preferably, the second wall is inclined at a greater angle to the angle of inclination of the first wall.

Preferably, each of the first and second walls includes at least one inclined finger projecting into the opening.

Preferably, each of the first and second walls includes a plurality of inclined fingers. More preferably, each of the first and second walls includes two or three inclined fingers.

Preferably, the fingers of the first and second walls are arranged in opposed pairs.

Preferably, the fingers are uniformly spaced.

Preferably, each of the fingers is narrower at its upper end than at its lower end such that the spaces between adjacent fingers taper to aid feeding of material through the inlet.

In one embodiment, the upper surface of each finger is substantially flat. In an alternative embodiment, the upper surface of each finger is generally arcuate, preferably convex.

In a further aspect, the present invention also provides a shredder incorporating a feed inlet as defined above.

The above and other aspects of the present invention will now be described in further detail, by way of example only, with reference to the accompanying drawings, in which:

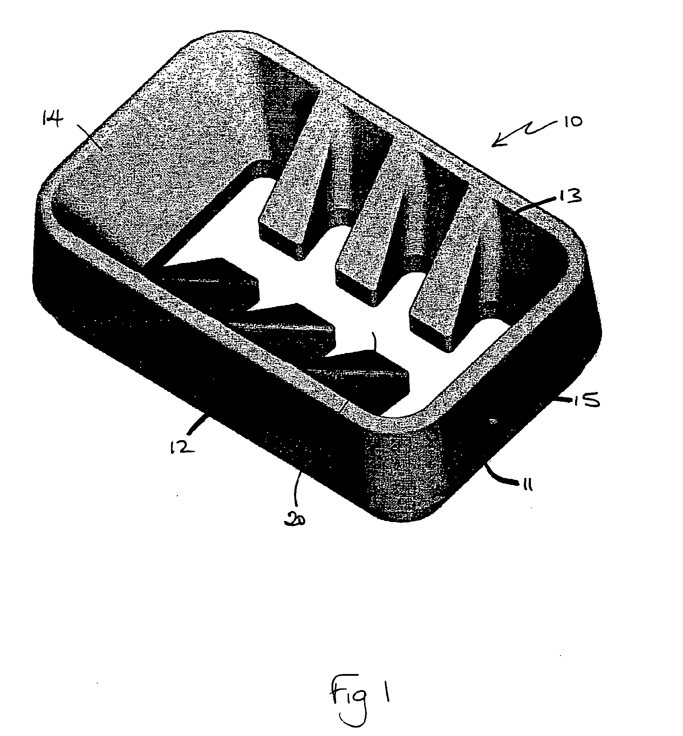

Figure 1 is a perspective view of a first embodiment of a shredder feed inlet in accordance with the present invention;
Figure 2 is a plan view of the embodiment of Figure 1;
Figure 3 is a sectional view along line III-III of Figure 2;
Figure 4 is a sectional view along line IV-IV of Figure 2;
Figure 5 is a part cut-away perspective view of an embodiment of a shredder in accordance with the second aspect of the present invention;
Figure 6 is a first perspective view of a second embodiment of a shredder feed inlet in accordance with the present invention; and
Figure 7 is a second perspective view of the embodiment of Figure 6.

Referring to the drawings, a feed inlet in accordance with the present invention for a shredder is shown generally at 10. The inlet 10 has an inlet body 11 of generally rectangular configuration having opposed first and second main walls 12,13 spaced apart by opposed side walls 14,15. The walls define an aperture 20 therebetween.

In the embodiment shown, each of the first and second main walls and the side walls 14,15 are inclined to aid direction, in use, of plant material into the shredder body upon which the inlet body will be mounted. In the preferred embodiment shown, the inclination of second main wall 13 is greater than that of first main wall 12. This asymmetrical inclination allows the user to guide difficult material to be fed into the shredder along the shallower slope of first main wall 12 whereupon it contacts the steeper slope of second main wall 13 guiding the material downwardly towards the shredding elements.

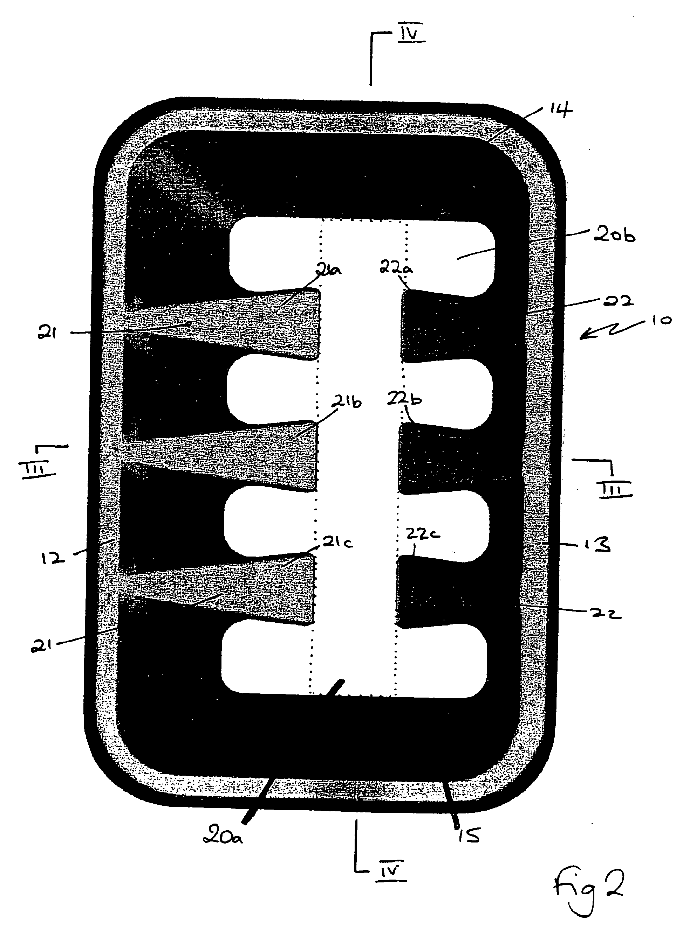

Each of the first and second main walls includes a respective array of fingers 21,22 projecting therefrom into aperture 20 forming opposed spaced finger pairs, 21a-22a, 21b-22b etc. The fingers 21,22 divide the aperture 20 into a central elongate aperture 20a (shown by the dotted line in Figure 2) with a plurality of lateral or branching apertures 20b.

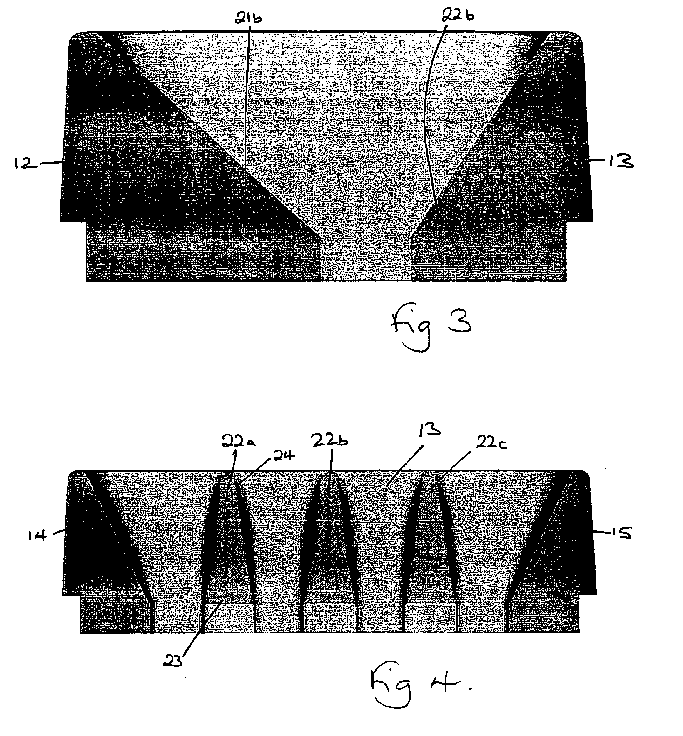

As is most clearly seen from Figure 3, each finger 21,22 is inclined, typically with first wall fingers 21 at a shallower angle of inclination to that of second wall fingers 22 and at a shallower angle of inclination to that of its respective wall 12,13.

As can be seen from Figure 4, typically, each finger is typically generally wedge-shaped, tapering widthways upwardly and being broader at its lower end 23 than at its upper end 24. This introduces the reverse characteristic in lateral apertures 20b whereby they taper downwardly to assist the user of a shredder incorporating the inventive inlet in directing plant material downwardly towards the shredding elements. However, the profile of any or all of the fingers need not be wedge-shaped. For example, the surfaces may be concave.

In the embodiment illustrated, the fingers in each array of fingers 21,22 are of equal lengths, extending into aperture 20. This is not an essential requirement and a non-symmetrical arrangement may be provided within, of course, the constraints of any safety standard requirements. Equally, each of the fingers in each array need not, as is the case in the embodiment shown, be of equal width, nor is it an essential feature that the fingers 21,22 project perpendicularly from respective walls 12,13.

Aperture 20 need not be straight (parallel to side walls 12, 13). In alternative embodiments, aperture 20 is wholly or partially arcuate.

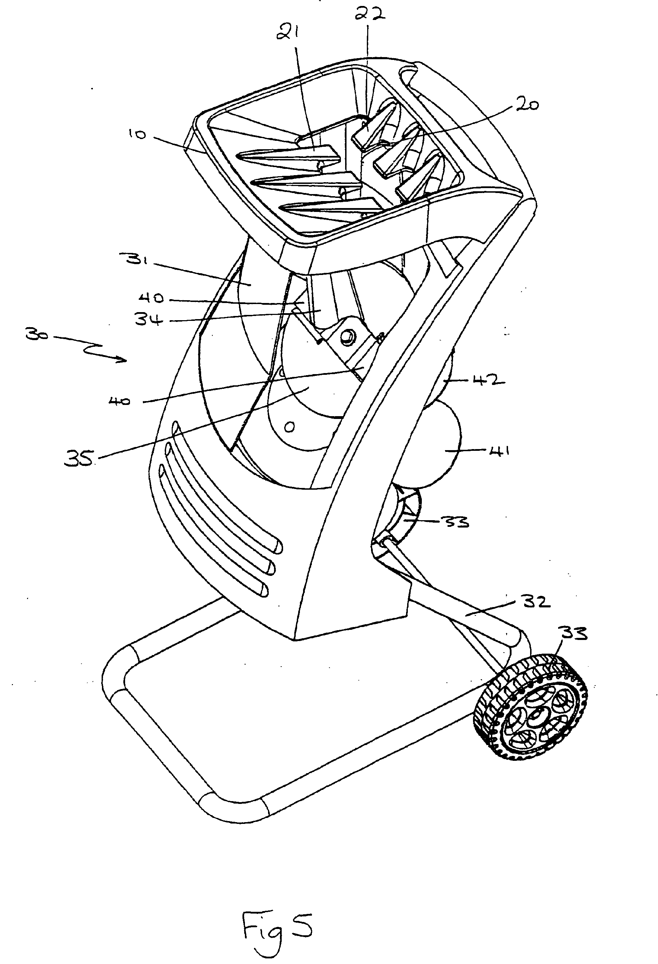

Figure 5 illustrates the inlet as a component of a complete shredder 30. Shredder 30 has a shredder housing 31 mounted for movement upon a frame 32 carrying a pair of wheels 33. Housing 31 includes an inlet 10 of the type described above in communication with a feed chute 34 which directs inserted plant material towards a cutter disc 35 mounting two cutters 40 rotationally separated by 180°. Cutter disc 35 is driven by an electric motor mounted in a motor housing 41 part of shredder housing 31, through an indirect drive assembly housed within a drive housing 42 part of shredder housing 31. Shredded plant material is ejected through an outlet of the shredder housing (obscured).

The present invention, whilst complying with safety standards as regards maximum dimensions of the various sections of aperture 20, in total provides a greater aperture area than would otherwise be possible, allowing insertion of bulkier plant material than is allowed by a conventional shredder feed inlet and insertion of more oddly-shaped materials.

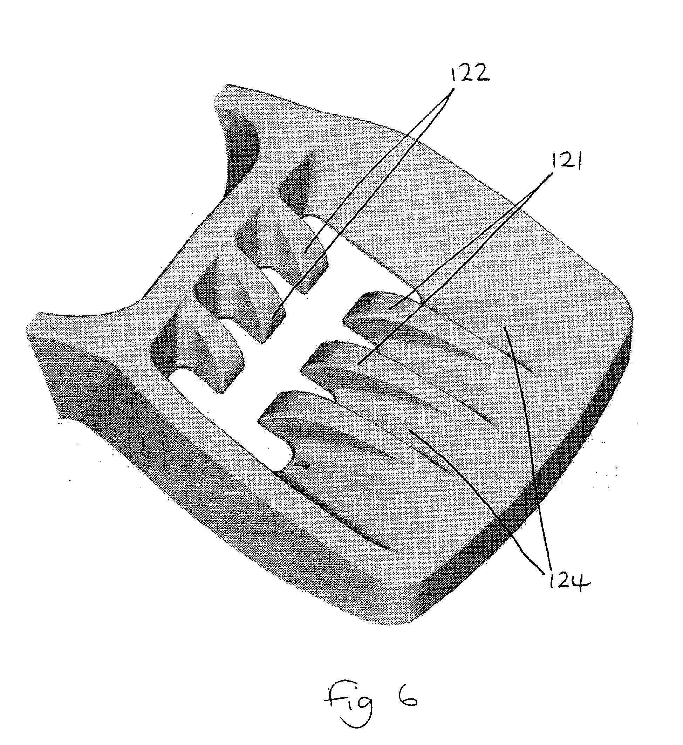

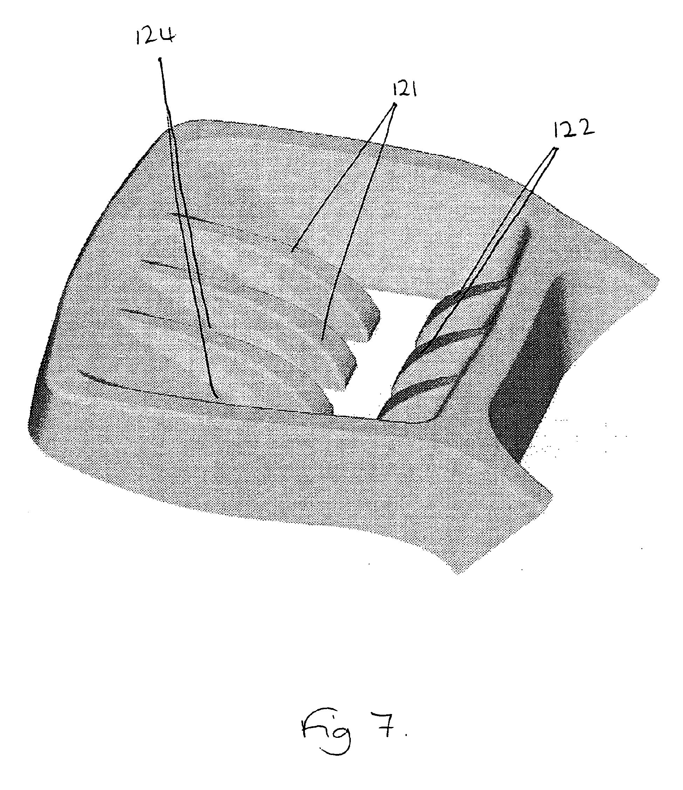

Figures 6 and 7 illustrate a modification to the first embodiment described above. Whereas, in the first embodiment, the upper surface of each finger 21,22 is substantially flat, in this embodiment, the upper surface of each finger 121,122 is generally curved, preferably convex. Similarly, the upper surface of the spaces 124 adjacent fingers 121 are also convexly curved. Curvature of these surfaces aids direction of material to be shredded into the feed chute 34.

## Claims

1. A feed inlet (10) for a shredder apparatus (30) the feed inlet (10) having an opening (20) between opposed first and second walls (12, 13), wherein at least one of the first and second walls (12, 13) includes at least one finger (21, 22) projecting into the opening (20).

2. A feed inlet (10) as claimed in Claim 1 wherein each finger (21, 22) includes an inclined upper surface.

3. A feed inlet (10) as claimed in Claim 1 or Claim 2 wherein each of the first and second walls (12,13) is inclined.

4. A feed inlet (10) as claimed in Claim 3 wherein the second wall (13) is inclined at a greater angle to the angle of inclination of the first wall (12).

5. A feed inlet (10) as claimed in any one of claims 1 to 4 wherein each of the first and second walls (12,13) includes at least one inclined finger (21,22) projecting into the opening (20).

6. A feed inlet (10) as claimed in Claim 5 wherein each of the first and second walls (12,13) includes a plurality of inclined fingers (21, 22)

7. A feed inlet (10) as claimed in Claim 6 wherein each of the first and second walls (12, 13) includes two or three inclined fingers (21, 22).

8. A feed inlet (10) as claimed in any one of claims 5 to 7 wherein the fingers (21, 22) of the first and second walls (12, 13) are arranged in opposed pairs.

9. A feed inlet (10) as claimed in any preceding claim wherein each of the fingers (21, 22) is narrower at its upper end (24) than at its lower end (23).

10. A feed inlet (10) as claimed in any preceding claim wherein the upper surface of each finger is generally arcuate, preferably convex.

11. A plant material shredding apparatus (30) comprising a shredding element (35) mounted within a shredder housing (31), the housing (31) having an inlet (10) as defined in any one of claims 1 to 10 for receipt, in use of plant material to be shredded, and an outlet for egress of shredded material.

## Patentansprüche

1. Zuführeinrichtung (10) für einen Apparat zum Zerhacken (30), wobei die Zuführeinrichtung (10) eine Öffnung (20) zwischen einer ersten Wand und einer zweiten Wand (12, 13), die sich gegenüber liegen, aufweist, wobei mindestens eine der ersten Wand und der zweiten Wand (12, 13) mindestens einen Finger (21, 22) aufweist, der in die Öffnung (20) ragt.

2. Zuführeinrichtung (10) nach Anspruch 1, wobei jeder Finger (21, 22) eine abgeschrägte obere Oberfläche aufweist.

3. Zuführeinrichtung (10) nach Anspruch 1 oder Anspruch 2, wobei jeweils die erste Wand und die zweite Wand (12, 13) abgeschrägt ist.

4. Zuführeinrichtung (10) nach Anspruch 3, wobei die zweite Wand (13) in einem größeren Winkel zu dem Neigungswinkel der ersten Wand (12) abgeschrägt ist.

5. Zuführeinrichtung (10) nach einem der Ansprüche 1 bis 4, wobei die erste Wand und die zweite Wand (12, 13) jeweils mindestens einen abgeschrägten Finger (21, 22) aufweist, der in die Öffnung (20) ragt.

6. Zuführeinrichtung (10) nach Anspruch 5, wobei die erste Wand und die zweite Wand (12, 13) jeweils eine Vielzahl von abgeschrägten Fingern (21, 22) aufweist.

7. Zuführeinrichtung (10) nach Anspruch 6, wobei die erste Wand und die zweite Wand (12, 13) jeweils zwei oder drei abgeschrägte Finger (21, 22) aufweist.

8. Zuführeinrichtung (10) nach einem der Ansprüche 5 bis 7, wobei die Finger (21, 22) der ersten Wand und der zweiten Wand (12, 13) in gegenüber liegenden Paaren angeordnet sind.

9. Zuführeinrichtung (10) nach einem der vorhergehenden Ansprüche, wobei jeder der Finger (21, 22) an seinem oberen Ende (24) schmaler als an seinem unteren Ende (23) ist.

10. Zuführeinrichtung (10) nach einem der vorhergehenden Ansprüche, wobei die obere Oberfläche jedes Fingers im Allgemeinen gebogen, vorzugsweise konvex ist.

11. Apparat zum Zerhacken (30) für Pflanzenmaterial, der ein Häckselelement (35) umfasst, das in einem Häckslergehäuse (31) installiert ist, wobei das Gehäuse (31) eine Einrichtung (10) nach einem der Ansprüche 1 bis 10, der bei Verwendung zur Aufnahme des zu zerkleinernden Pflanzenmaterials dient, sowie einen Auslass, aus dem das zerkleinerte Material austritt, aufweist.

## Revendications

1. Admission (10) pour un appareil déchiqueteur (30), l'admission (10) présentant une ouverture (20) entre des première et seconde parois opposées (12, 13), dans laquelle au moins l'une des première et seconde parois (12, 13) inclut au moins un doigt (21, 22) se projetant dans l'ouverture (20).

2. Admission (10) selon la revendication 1, dans laquelle chaque doigt (21, 22) inclut une surface supérieure inclinée.

3. Admission (10) selon la revendication 1 ou la revendication 2, dans laquelle chacune des première et seconde parois (12, 13) est inclinée.

4. Admission (10) selon la revendication 3, dans laquelle la seconde paroi (13) est inclinée selon un angle supérieure à l'angle d'inclinaison de la première paroi (12).

5. Admission (10) selon l'une quelconque des revendications 1 à 4, dans laquelle chacune des première et seconde parois (12, 13) inclut au moins un doigt incliné (21, 22) se projetant dans l'ouverture (20).

6. Admission (10) selon la revendication 5, dans laquelle chacune des première et seconde parois (12, 13) inclut une pluralité de doigts inclinés (21, 22).

7. Admission (10) selon la revendication 6, dans laquelle chacune des première et seconde parois (12, 13) inclut deux ou trois doigts inclinés (21, 22).

8. Admission (10) selon l'une quelconque des revendications 5 à 7, dans laquelle les doigts (21, 22) des première et seconde parois (12, 13) sont agencés par paires opposées.

9. Admission (10) selon l'une quelconque des revendications précédentes, dans laquelle chacun des doigts (21, 22) est plus étroit au niveau de son extrémité supérieure (24) qu'au niveau de son extrémité inférieure (23).

10. Admission (10) selon l'une quelconque des revendications précédentes, dans laquelle la surface supérieure de chaque doigt est globalement arquée, de préférence convexe.

11. Appareil à déchiqueter de matière végétale (30) comprenant un élément à déchiqueter (35) monté dans un logement (31) de l'appareil déchiqueteur, le logement (31) comportant une admission (10) selon l'une quelconque des revendications 1 à 10 pour réception, en cours d'utilisation, d'une matière végétale à déchiqueter, et une sortie pour la sortie de la matière déchiquetée.
